# EUROPEAN PATENT APPLICATION

(11) **EP 4 550 083 A1**
(43) Date of publication of application: **07.05.2025**
(21) Application number: 23852721.2
(22) Date of filing: 21.06.2023
(51) Int. Cl.: G06F 1/16, G06F 3/0354, H04M 1/02, H05K 9/00, H04M 1/21

(54) **ELECTRONIC DEVICE HAVING DIGITAL PEN PLACED THEREON**

(30) Priority: 12.08.2022 KR 20220101380; 20.09.2022 KR 20220118432
(71) Applicant: Samsung Electronics Co., Ltd., Suwon-si, Gyeonggi-do 16677 (KR)
(72) Inventor: HEO, Joon, Suwon-si Gyeonggi-do 16677 (KR); OH, Chanhee, Suwon-si Gyeonggi-do 16677 (KR); PARK, Joonhyung, Suwon-si Gyeonggi-do 16677 (KR)
(74) Representative: Walaski, Jan Filip
(86) International application number: PCT/KR2023/008609
(87) International publication number: WO 2024/034834

(57) **Abstract**

An electronic device may comprise: a housing; a groove disposed in the housing, the groove comprising an enclosure portion including a hollow portion configured to receive a digital pen, and an enclosure face at least partially defining the hollow portion; a printed circuit board configured to recognize and/or charge the digital pen, the printed circuit board facing the hollow portion and being disposed in the housing; and a magnetic material disposed on the enclosure face.

## Description

### TECHNICAL FIELD

The disclosure relates to an electronic device in which a digital pen is disposed.

### BACKGROUND ART

An electronic device may include a digital pen configured to receive a command or data from a user. The digital pen disposed in the electronic device may be charged by receiving electrical energy from the electronic device. The above description includes information acquired during the course of conceiving the present disclosure, or already possessed at the time, and is not necessarily art publicly known before the present application was filed.

### SUMMARY

According to an example embodiment, an electronic device may include: a housing, a groove disposed in the housing, and including a hollow portion configured to accommodate a digital pen, and an enclosure portion including an enclosure surface at least partially defining the hollow portion, a printed circuit board (PCB) configured to recognize and/or charge the digital pen, and disposed in the housing to face the hollow portion, and a magnetic body disposed on the enclosure surface.

According to an example embodiment, an electronic device may include: a first housing, a second housing, and a hinge structure configured to connect the first housing and the second housing, and to rotate the first housing and the second housing between a folded state in which the first housing and the second housing form a first angle, and an unfolded state in which the first housing and the second housing form a second angle greater than the first angle, a groove disposed in the first housing or the second housing, and including a hollow portion configured to accommodate a digital pen, and an enclosure portion including an enclosure surface at least partially defining the hollow portion, a printed circuit board (PCB) configured to recognize and/or charge the digital pen, and disposed in the housing to face the hollow portion, and a magnetic body disposed on the enclosure surface.

### BRIEF DESCRIPTION OF THE DRAWINGS

The foregoing and other aspects, features, and advantages of certain embodiments in the present disclosure will be more apparent from the following detailed description, taken in conjunction with the accompanying drawings, in which:
FIG. 1 is a block diagram illustrating an example electronic device in a network environment according to various embodiments;
FIG. 2A is a diagram illustrating an example electronic device in an unfolded state according to various embodiments;
FIG. 2B is a diagram illustrating an example electronic device in a folded state according to various embodiments;
FIG. 3 is an exploded perspective view of an electronic device according to various embodiments;
FIG. 4 is a diagram illustrating a side view of a digital pen according to various embodiments;
FIG. 5 is a cross-sectional view of the digital pen of FIG. 4, taken along a line 5-5, according to various embodiments;
FIG. 6 is a cross-sectional view of the digital pen of FIG. 4, taken along a line 6-6, according to various embodiments;
FIG. 7 is a diagram illustrating a plan view of an electronic device in a state where a digital pen is not disposed in an electronic device according to various embodiments;
FIG. 8 is a diagram illustrating a plan view of an electronic device in a state where a digital pen is disposed in an electronic device according to various embodiments;
FIG. 9 is a cross-sectional view of the electronic device of FIG. 8, taken along a line 9-9, according to various embodiments;
FIG. 10 is a cross-sectional view of the electronic device of FIG. 8, taken along a line 10-10, according to various embodiments;
FIG. 11 is a cross-sectional view of a magnetic body of the electronic device of FIG. 8, taken along a line 10-10, according to various embodiments; and
FIG. 12 is a cross-sectional view of the electronic device of FIG. 8, taken along a line 10-10, according to various embodiments.

### DETAILED DESCRIPTION

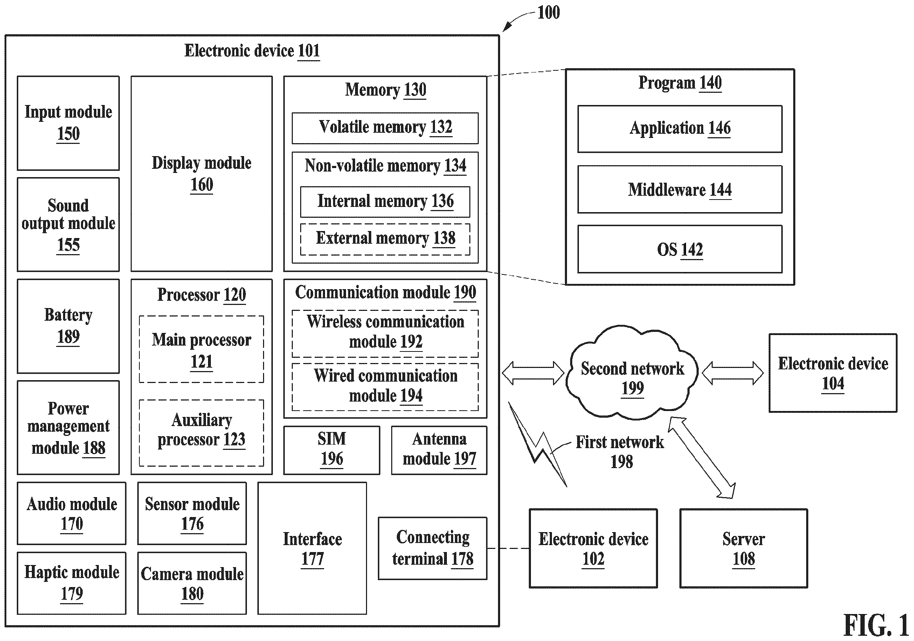

FIG. 1 is a block diagram illustrating an example electronic device in a network environment according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one (e.g., the connecting terminal 178) of the above components may be omitted from the electronic device 101, or one or more other components may be added in the electronic device 101. In various embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated by machine learning. Such learning may be performed by, for example, the electronic device 101 in which AI is performed, or performed via a separate server (e.g., the server 108). A learning algorithm may include, but is not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a portion of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to sense a touch, or a pressure sensor adapted to measure an intensity of a force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local region network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multi components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a portion of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic device may include, for example, a portable communication device (e.g., a smartphone), a computer device, a portable multimedia device, a portable medical device, a camera, a wearable device, a home appliance device, or the like. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms, such as "first" or "second", are simply used to distinguish a component from another component and do not limit the components in other aspects (e.g., importance or sequence). It is to be understood that if an element (e.g., a first element) is referred to, with or without the term "operatively" or "communicatively," as "coupled with," "coupled to," "connected with," or "connected to" another element (e.g., a second element), the element may be coupled with the other element directly (e.g., by wire), wirelessly, or via a third element.

As used in connection with embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments disclosed herein may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. **In** such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

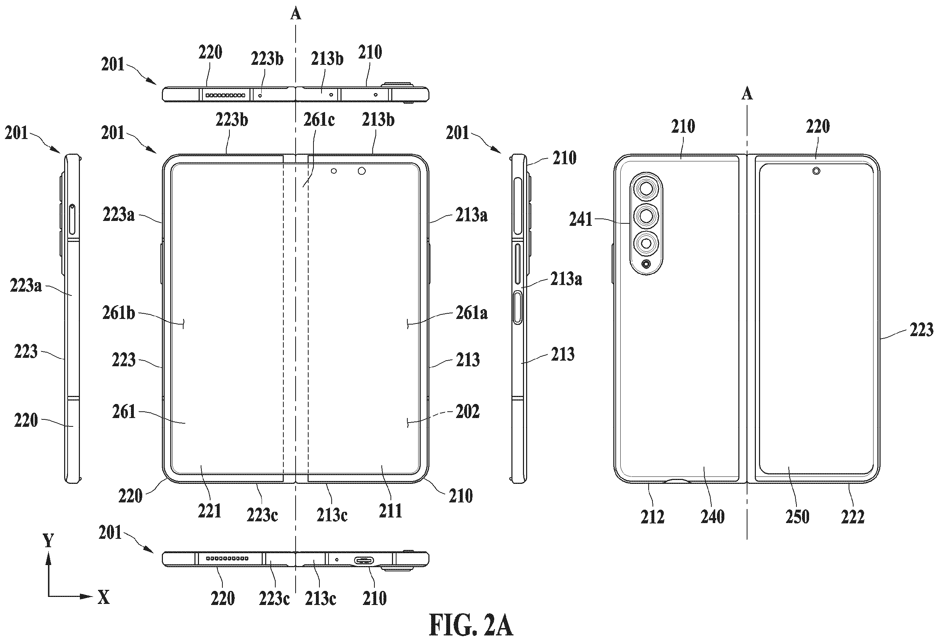

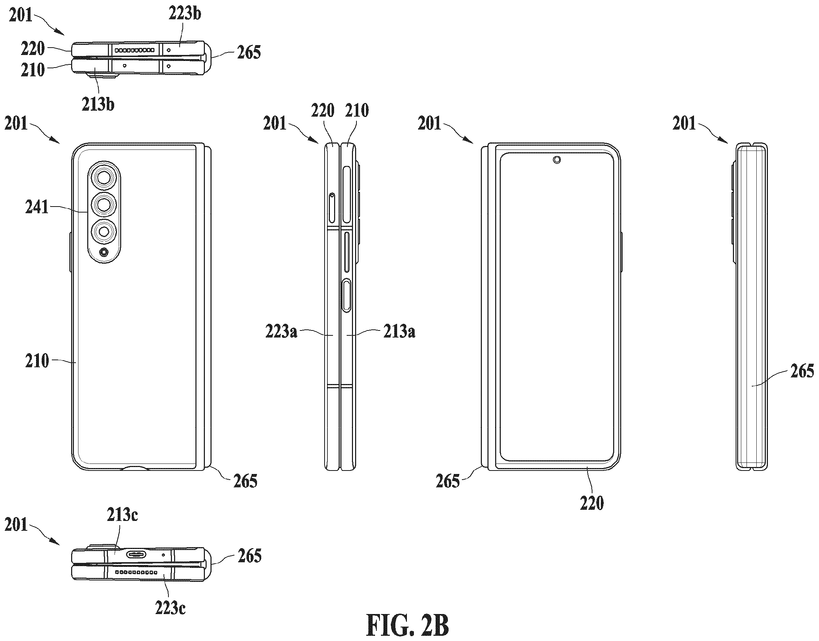

FIG. 2A is a diagram illustrating an example electronic device in an unfolded state according to various embodiments. FIG. 2B is a diagram illustrating an example electronic device in a folded state according to various embodiments.

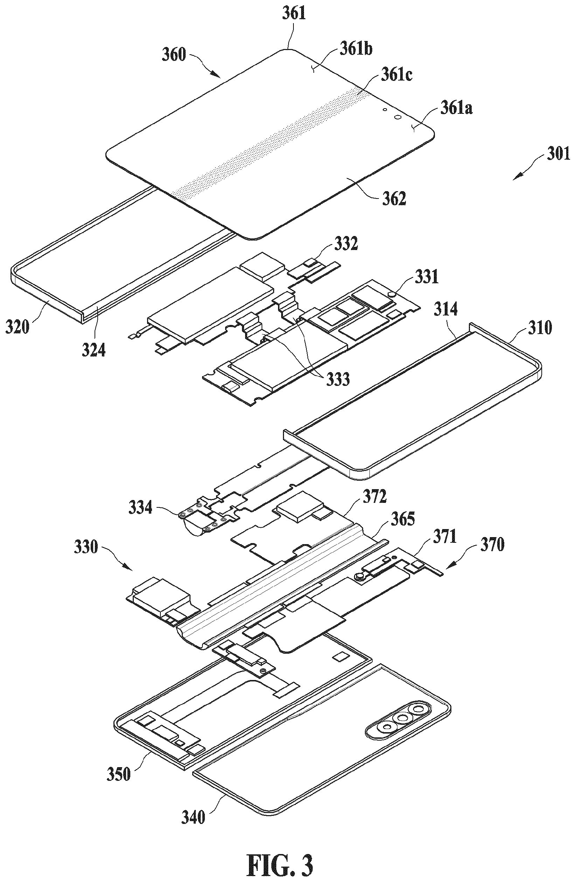

Referring to FIGS. 2A and 2B, a foldable electronic device 201 (e.g., the electronic device 101 of FIG. 1) may include a pair of housings 210 and 220 rotatably coupled through a hinge structure (e.g., a hinge structure 334 of FIG. 3) to be folded relative to each other. The electronic device 201 may include a hinge cover 265 that covers a foldable portion of the pair of housings 210 and 220. The electronic device 201 may include a display 261 (e.g., the display module 160 of FIG. 1) disposed in a space formed by the pair of housings 210 and 220. For example, the display 261 may include a flexible display or a foldable display. In the present disclosure, a surface on which the display 261 is disposed may be defined as a front surface of the electronic device 201, and a surface opposite to the front surface may be defined as a rear surface of the foldable electronic device 201. In addition, a surface surrounding a space between the front surface and the rear surface may be defined as a side surface of the foldable electronic device 201.

In an embodiment, the electronic device 201 may include the first housing 210, the second housing 220, a first rear cover 240, and a second rear cover 250. The first housing 210, the second housing 220, the first rear cover 240, and the second rear cover 250 are not limited to the shapes or the combination and/or coupling of components shown in FIGS. 2A and 2B, and may be implemented in other shapes or by another combination and/or coupling of components.

In an embodiment, the first housing 210 and the second housing 220 may be disposed on both sides with respect to a folding axis A, and may be disposed substantially symmetrically with respect to the folding axis A. In an embodiment, an angle and/or a distance between the first housing 210 and the second housing 220 may vary depending on whether the electronic device 201 is in an unfolded state, a folded state, or an intermediate state. In an embodiment, the first housing 210 and the second housing 220 may have substantially symmetrical shapes.

In an embodiment, the first housing 210 may be connected to the hinge structure (e.g., the hinge structure 334 of FIG. 3) in the unfolded state (e.g., the state of FIG. 2A) of the electronic device 201. The first housing 210 may include a first surface 211 disposed to face the front surface of the electronic device 201. The first housing 210 may include a second surface 212 opposite to the first surface 211. The first housing 210 may include a first side portion 213 that surrounds at least a portion of a space between the first surface 211 and the second surface 212. The first side portion 213 may include a first side surface 213a disposed to be substantially parallel with the folding axis A. The first side portion 213 may include a second side surface 213b extending from one end portion of the first side surface 213a in a direction substantially perpendicular to the folding axis A. The first side portion 213 may include a third side surface 213c extending from the other end portion of the first side surface 213a in a direction substantially perpendicular to the folding axis A and substantially parallel with the second side surface 213b.

In an embodiment, the second housing 220 may be connected to a hinge structure (e.g., the hinge structure 334 of FIG. 3) in the unfolded state (e.g., the state of FIG. 2A) of the electronic device 201. The second housing 220 may include a third surface 221 disposed to face the front surface of the electronic device 201. The second housing 220 may include a fourth surface 222 opposite to the third surface 221. The second housing 220 may include a second side portion 223 that surrounds at least a portion of a space between the third surface 221 and the fourth surface 222. The second side portion 223 may include a fourth side surface 223a disposed substantially in parallel with the folding axis A. The second side portion 223 may include a fifth side surface 223b extending from one end portion of the fourth side surface 223a in a direction substantially perpendicular to the folding axis A. The second side portion 223 may include a sixth side surface 223c extending from the other end portion of the fourth side surface 223a in a direction substantially perpendicular to the folding axis A and substantially parallel with the fifth side surface 223b.

In an embodiment, the first surface 221 and the third surface 221 may face each other when the electronic device 201 is in the folded state (e.g., the state of FIG. 2B).

In an embodiment, the electronic device 201 may include an accommodation portion 202. The accommodation portion 202 may be configured to accommodate the display 261 through structural coupling of the first housing 210 and the second housing 220. The accommodation portion 202 may have a recessed shape. The accommodation portion 202 may have a size that is substantially the same as a size of the display 261.

In an embodiment, the first housing 210 may at least partially include a metal and/or non-metal material. In an embodiment, the second housing 220 may at least partially include a metal and/or non-metal material.

In an embodiment, the electronic device 201 may include at least one component for performing various functions. The component may be visually exposed from the front surface of the electronic device 201. For example, the component may include at least one of a front camera module, a receiver, a proximity sensor, an illuminance sensor, an iris recognition sensor, an ultrasonic sensor, or an indicator, or a combination thereof.

In an embodiment, the first rear cover 240 may be disposed on the second surface 212 of the first housing 210. The first rear cover 240 may have substantially rectangular peripheries. At least a portion of at least one of the peripheries of the first rear cover 240 may be surrounded by the first housing 210.

In an embodiment, the second rear cover 250 may be disposed on a fourth surface 222 of the second housing 220. The second rear cover 250 may have substantially rectangular peripheries. At least a portion of at least one of the peripheries of the second rear cover 250 may be surrounded by the second housing 220.

In an embodiment, the first rear cover 240 and the second rear cover 250 may have substantially symmetrical shapes with respect to the folding axis A. In an embodiment, the first rear cover 240 and the second rear cover 250 may have different shapes. In an embodiment, the first housing 210 and the first rear cover 240 may be integrally formed. In an embodiment, the second housing 220 and the second rear cover 250 may be integrally formed.

In an embodiment, the first housing 210, the second housing 220, the first rear cover 240, and the second rear cover 250 may provide a space in which at least one component (e.g., a PCB, the antenna module 197 of FIG. 1, the sensor module 176 of FIG. 1, or the battery 189 of FIG. 1) of the electronic device 201 may be arranged through a structure in which the first housing 210, the second housing 220, the first rear cover 240, and the second rear cover 250 are coupled to one another. In an embodiment, the at least one component may be visually exposed from the rear surface of the electronic device 201. For example, the at least one component may be visually exposed through a first rear area 241 of the first rear cover 240. Here, the component may include a proximity sensor, a rear camera module, and/or a flash.

In an embodiment, the display 261 may be arranged to occupy substantially most of the front surface of the electronic device 201. The front surface of the electronic device 201 may include an area where the display 261 is arranged. The front surface of the electronic device 201 may include a partial area (e.g., a periphery area) of the first housing 210 adjacent to the display 261. The front surface of the electronic device 201 may include a partial area (e.g., a periphery area) of the second housing 220. The rear surface of the electronic device 201 may include at least a partial area of the first rear cover 240. The rear surface of the electronic device 201 may include a partial area (e.g., a periphery area) of the first housing 210 adjacent to the first rear cover 240. The rear surface of the electronic device 201 may include at least a partial area of the second rear cover 250. The rear surface of the electronic device 201 may include a partial area (e.g., a periphery area) of the second housing 220 adjacent to the second rear cover 250.

In an embodiment, the display 261 may include a display configured to be at least partially deformable into a planar surface or a curved surface. The display 261 may include a flexible area 261c. The display 261 may include a first area 261a on a first side (e.g., a right side) based on the flexible area 261c. The display 261 may include a second area 261b on a second side (e.g., a left side) based on the flexible area 261c. The first area 261a may be disposed on the first surface 211 of the first housing 210. The second area 261b may be disposed on the third surface 221 of the second housing 220.

In an embodiment, the display 261 may be divided into a plurality of areas. The areas of the display 261 may be divided by the flexible area 261c extending parallel with a Y-axis or the folding axis A. In an embodiment, the areas of the display 261 may be divided by another flexible area (e.g., a flexible area extending parallel with an X-axis) or another folding axis (e.g., a folding axis parallel to the X-axis). In an embodiment, the display 261 may display substantially one screen. In an embodiment, the first area 261a and the second area 261b may have substantially symmetrical shapes with respect to the flexible area 261c.

In an embodiment, the hinge cover 265 may be configured to cover a hinge structure (e.g., the hinge structure 334 of FIG. 3). The hinge cover 265 may be disposed between the first housing 210 and the second housing 220.

In an embodiment, the hinge cover 265 may be hidden or exposed externally by at least a portion of the first housing 210 and/or at least a portion of the second housing 220 depending on an operating state of the electronic device 201. For example, as shown in FIG. 2A, when the electronic device 201 is in the unfolded state, the hinge cover 265 may be hidden by the first housing 210 and the second housing 220 and may not be exposed externally. As shown in FIG. 2B, when the electronic device 201 is in the folded state, the hinge cover 265 may be exposed externally between the first housing 210 and the second housing 220. When the electronic device 201 is in the intermediate state where the first housing 210 and the second housing 220 form an angle with each other, at least a portion of the hinge cover 265 may be exposed externally between the first housing 210 and the second housing 220. The area of the hinge cover 265 exposed externally may be smaller than the exposed area of the hinge cover 265 when the electronic device 201 is in the folded state. In an embodiment, the hinge cover 265 may have at least a partially curved surface.

According to an embodiment, when the electronic device 201 is in the unfolded state (e.g., the state of the electronic device 201 of FIG. 2A), the first housing 210 and the second housing 220 may form a first angle (e.g., about 180 degrees) with respect to each other. The first area 261a and the second area 261b of the display 261 may be oriented in substantially the same direction. The flexible area 261c of the display 261 may be substantially on the same plane as the first area 261a and the second area 261b.

According to an embodiment, the first housing 210 may rotate at a second angle (e.g., about 360 degrees) relative to the second housing 220, or the second housing 220 may rotate at the second angle relative to the first housing 210. The first housing 210 and the second housing 220 may be folded in opposite directions so that the second surface 212 and the fourth surface 222 face each other.

According to an embodiment, when the electronic device 201 is in the folded state (e.g., the state of the electronic device 201 of FIG. 2B), the first housing 210 and the second housing 220 may face each other. The first housing 210 and the second housing 220 may form an angle of about 0 degrees to about 10 degrees. The first area 261a and the second area 261b of the display 261 may face each other. At least a portion of the flexible area 261c of the display 261 may be deformed into a curved surface.

According to an embodiment, when the electronic device 201 is in the intermediate state, the first housing 210 and the second housing 220 may form a specific angle with each other. A third angle (e.g., about 90 degrees) formed by the first area 261a and the second area 261b of the display 261 may be larger than an angle when the electronic device 201 is in the folded state and smaller than an angle when the electronic device 201 is in the unfolded state. At least a portion of the flexible area 261c of the display 261 may be deformed into a curved surface. A curvature of the curved surface of the flexible area 261c may be smaller than a curvature of the curved surface of the flexible area 261c when the electronic device 201 is in the folded state.

Meanwhile, embodiments of the electronic device described herein are not limited to the electronic device 201 described with reference to FIGS. 2A and 2B and may also apply to other types of electronic devices.

FIG. 3 is an exploded perspective view of an electronic device according to various embodiments.

Referring to FIG. 3, an electronic device 301 (e.g., the electronic device 101 of FIG. 1 and/or the electronic device 201 of FIGS. 2A and 2B) may include a first housing 310 (e.g., the first housing 210 of FIGS. 2A and 2B) and a second housing 320 (e.g., the second housing 220 of FIGS. 2A and 2B). The electronic device 301 may include a first rear cover 340 (e.g., the first rear cover 240 of FIGS. 2A and 2B) and a second rear cover 350 (e.g., the second rear cover 250 of FIGS. 2A and 2B).

In an embodiment, the first housing 310 and the second housing 320 may be coupled to both sides of a hinge assembly 330 in a state where a display module 360 is coupled to the hinge assembly 330.

In an embodiment, the first housing 310 may include a first rotational support surface 314. In an embodiment, the second housing 320 may include a second rotational support surface 324. The first rotational support surface 314 and the second rotational support surface 324 may each include a curved surface corresponding to a curved surface included in a hinge cover 365.

In an embodiment, when the electronic device 301 is in the unfolded state (e.g., the state of FIG. 2A), the first rotational support surface 314 and the second rotational support surface 324 may cover the hinge cover 365. The hinge cover 365 may not be substantially exposed to a rear surface of the electronic device 301.

In an embodiment, when the electronic device 301 is in the folded state (e.g., the state of FIG. 2B), the first rotational support surface 314 and the second rotational support surface 324 may rotate along the curved surface of the hinge cover 365. The hinge cover 365 may be exposed to the rear surface of the electronic device 301.

In an embodiment, the electronic device 301 may include the display module 360 (e.g., the display module 160 of FIG. 1). The display module 360 may include a display 361 (e.g., the display 261 of FIGS. 2A and 2B). The display module 360 may include at least one layer or plate 362 on which the display 361 is seated. The display 361 may be disposed on at least a portion of one surface (e.g., an upper surface) of the plate 362. The plate 362 may be disposed between the display 361 and the hinge assembly 330. The plate 362 may be formed in a shape corresponding to the display 361.

In an embodiment, the electronic device 301 may include the hinge assembly 330. The hinge assembly 330 may include a first bracket 331. The hinge assembly 330 may include a second bracket 332. The hinge assembly 330 may include the hinge structure 334 disposed between the first bracket 331 and the second bracket 332. The hinge assembly 330 may include the hinge cover 365 configured to cover the hinge structure 334 when the hinge structure 334 is viewed from the outside. The hinge assembly 330 may include a printed circuit board (PCB) 333 that traverses the first bracket 331 and the second bracket 332. In an embodiment, the PCB 333 may include a flexible printed circuit board (FPCB).

In an embodiment, the first bracket 331 may be disposed between a first area 361a of the display 361 and a first substrate 371. The second bracket 332 may be disposed between a second area 361b of the display 361 and a second substrate 372.

In an embodiment, the PCB 333 may be disposed in a direction (e.g., an X-axis direction) that traverses the first bracket 331 and the second bracket 332. The PCB 333 may be disposed in a direction (e.g., the X-axis direction) perpendicular to a folding axis (e.g., the Y-axis or the folding axis A of FIG. 2A) of a flexible area 361c of the electronic device 301.

In an embodiment, the electronic device 301 may include a substrate 370. The substrate 370 may include the first substrate 371 disposed on the side of the first bracket 331. The substrate 370 may include the second substrate 372 disposed on the side of the second bracket 332. The first substrate 371 and the second substrate 372 may be disposed in a space formed by the hinge assembly 330, the first housing 310, the second housing 320, the first rear cover 340, and the second rear cover 350.

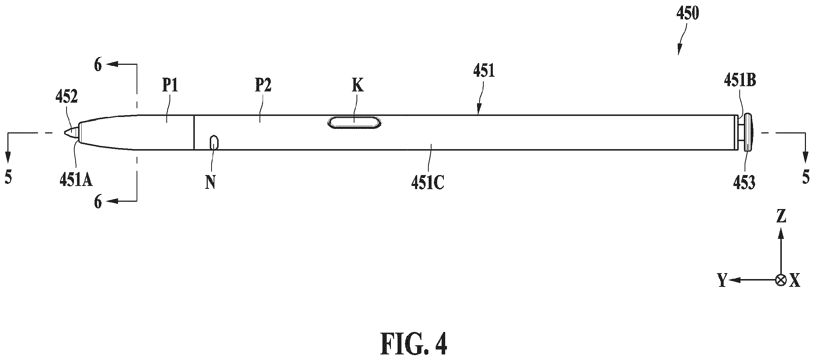

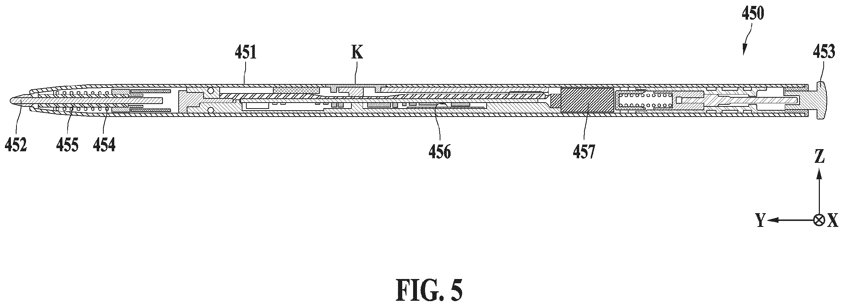

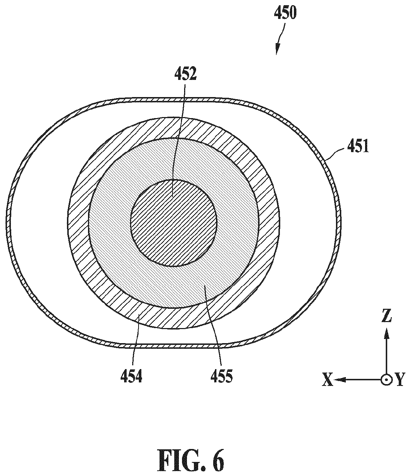

FIG. 4 is a diagram illustrating a side view of a digital pen according to various embodiments. FIG. 5 is a cross-sectional view of the digital pen of FIG. 4, taken along a line 5-5, according to various embodiments. FIG. 6 is a cross-sectional view of the digital pen of FIG. 4, taken along a line 6-6, according to various embodiments.

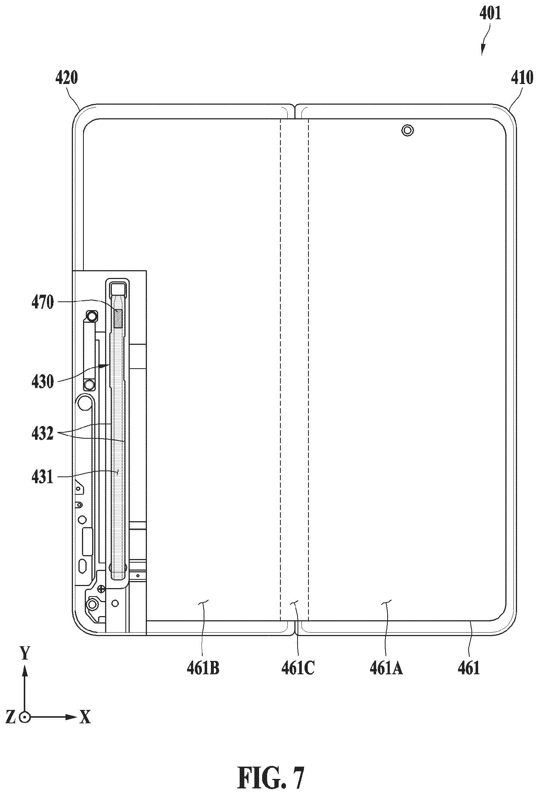

Referring to FIGS. 4 to 6, a digital pen 450 (e.g., the input module 150 of FIG. 1) may be configured to receive an input (e.g., a command or data) to be used for a component (e.g., the processor 120) of an electronic device (e.g., the electronic device 101 of FIG. 1, the electronic device 201 of FIGS. 2A and 2B, the electronic device 301 of FIG. 3, and/or an electronic device 401 of FIGS. 7 to 10). For example, the digital pen 450 may include a stylus pen.

In an embodiment, the digital pen 450 may include a pen housing 451. The pen housing 451 may include a first pen end portion 451A (e.g., an end portion in a +Y direction), a second pen end portion 451B (e.g., an end portion in a -Y direction) opposite to the first pen end portion 451A, and a pen extension 451C extending between the first pen end portion 451A and the second pen end portion 451B.

In an embodiment, the pen extension 451C may include a plurality of parts. For example, the pen extension 451C may include a first part P1 and a second part P2. The first part P1 may form a front portion of the pen housing 451. The first part P1 may have a diameter or a width that at least partially decreases along an extension direction (e.g., the +/-Y direction) of the pen extension 451C. The second part P2 may form a rear portion of the pen housing 451. The second part P2 may have a diameter or a width that is substantially constant along the extension direction (e.g., the +/-Y direction) of the pen housing 451. The first part P1 and the second part P2 may be integrally and seamlessly connected to each other.

In an embodiment, the pen extension 451C may include a notch N. The notch N may be formed at least partially in the pen extension 451C in a circumferential direction (e.g., a circumferential direction around the +Y-axis) of the pen extension 451C. In an embodiment, the notch N may be positioned in the second part P2.

In an embodiment, the pen extension 451C may include a key K. For example, the key K may include a button and/or any other suitable mechanical actuator. The key K may be at least partially disposed in an internal space of the pen extension 451C. The key K may be at least partially exposed to the outside of the pen extension 451C.

In an embodiment, the digital pen 450 may include a pen tip 452. At least a portion of the pen tip 452 may be exposed from the first pen end portion 451A. The pen tip 452 may be configured to extend from the first pen end portion 451A to the outside of the pen extension 451C. The pen tip 452 may be configured to be retracted from the first pen end portion 451A into the inside of the pen extension 451C. The pen tip 452 may extend at least partially along a length of the pen extension 451C in the extension direction (e.g., the +/-Y direction) of the pen extension 451C. The pen tip 452 may be disposed inside the first part P1.

In an embodiment, the digital pen 450 may include a stopper 453. For example, when the digital pen 450 is disposed in an electronic device (e.g., the electronic device 101 of FIG. 1, the electronic device 201 of FIGS. 2A and 2B, and/or the electronic device 301 of FIG. 3), the stopper 453 may cause the digital pen 450 to be disposed in an internal space of the electronic device by a predetermined dimension (e.g., length or width). The stopper 453 may be disposed on the second pen end portion 451B. At least a portion of the stopper 453 may be separated from the second pen end portion 451B by a predetermined distance.

In an embodiment, the digital pen 450 may include a coil 454. An induced current may flow through the coil 454 due to a field generated from the outside of the digital pen 450. The coil 454 may be disposed in a state of being wound in a circumferential direction of the pen tip 452. The coil 454 may extend at least partially along a length of the pen tip 452 in the extension direction (e.g., the +/-Y direction) of the pen tip 452.

In an embodiment, the digital pen 450 may include a magnetic body 455. The magnetic body 455 may be disposed between the pen tip 452 and the coil 454. The magnetic body 455 may extend along the circumference of the pen tip 452. The magnetic body 455 may have a substantially annular cross-section. In an embodiment, the magnetic body 455 may include a ferrite. In an embodiment, the magnetic body 455 may include a magnetic mica powder (MMP) having a predetermined permeability.

In an embodiment, the digital pen 450 may include a printed circuit board (PCB) 456. The PCB 456 may include a power management module (e.g., the power management module 188 of FIG. 1). In an embodiment, the PCB 456 may include a circuit (not shown). The circuit and the coil 454 may define a resonant frequency for electromagnetic coupling from the outside. For example, the coil 454 may define a parameter corresponding to a capacitance of the resonant frequency, and the circuit may define a parameter corresponding to an inductance of the resonant frequency. The predetermined resonant frequency may be used to detect the digital pen 450.

In an embodiment, the digital pen 450 may include a battery 457 (e.g., the battery 189 of FIG. 1). The battery 457 may be charged by receiving electrical energy through the coil 454.

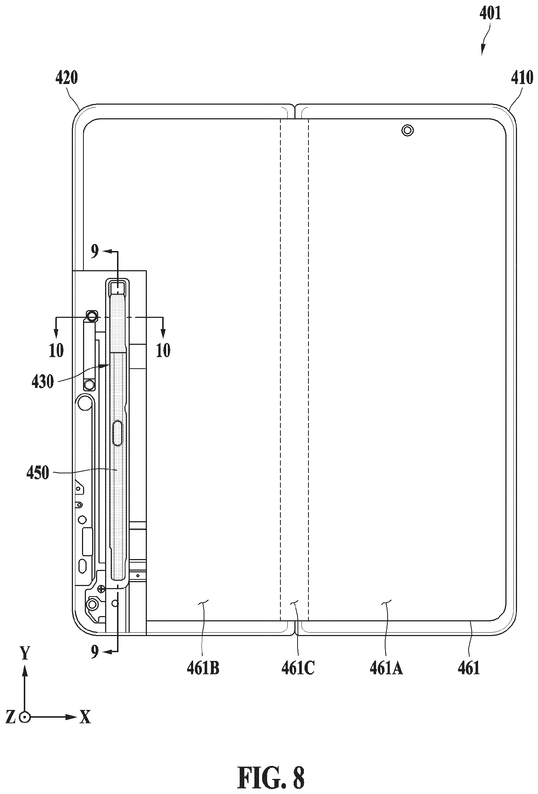

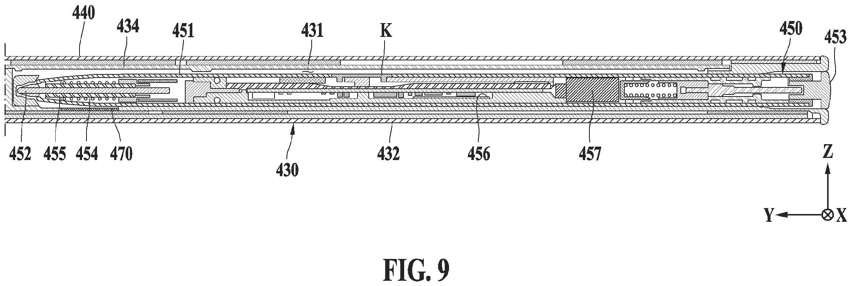

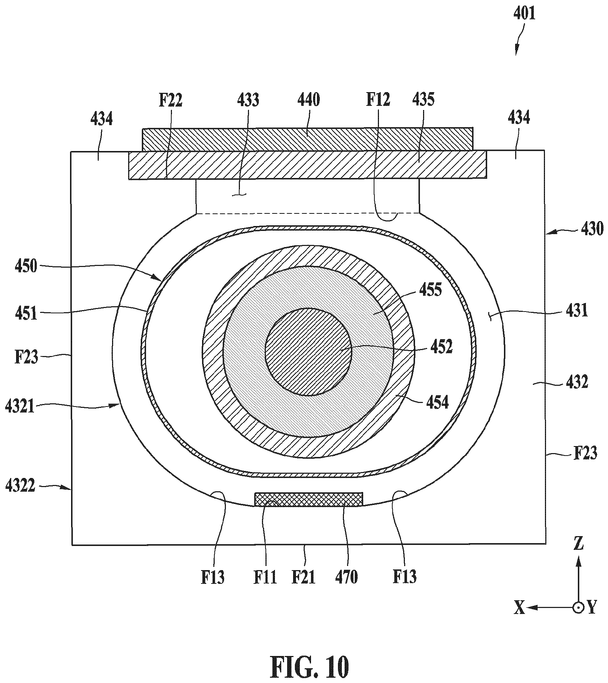

FIG. 7 is a diagram illustrating a plan view of an electronic device in a state where a digital pen is not disposed in an electronic device according to various embodiments. FIG. 8 is a diagram illustrating a plan view of an electronic device in a state where a digital pen is disposed in an electronic device according to various embodiments. FIG. 9 is a cross-sectional view of the electronic device of FIG. 8, taken along a line 9-9, according to various embodiments. FIG. 10 is a cross-sectional view of the electronic device of FIG. 8, taken along a line 10-10, according to various embodiments.

Referring to FIGS. 7 to 10, the electronic device 401 (e.g., the electronic device 101 of FIG. 1, the electronic device 201 of FIGS. 2A and 2B, and/or the electronic device 301 of FIG. 3) may include a first housing 410 (e.g., the first housing 210 of FIGS. 2A and 2B and /or the first housing 310 of FIG. 3). The electronic device 401 may include a second housing 420 (e.g., the second housing 220 of FIGS. 2A and 2B and/or the second housing 320 of FIG. 3).

In an embodiment, the electronic device 401 may include a groove 430. The groove 430 may include a hollow portion 431 configured to at least partially accommodate the digital pen 450. The groove 430 may include an enclosure portion 432 that surrounds the hollow portion 431. The enclosure portion 432 may include an inner enclosure surface 4321 that at least partially defines the hollow portion 431.

In an embodiment, the enclosure portion 432 may include an outer enclosure surface 4322. In an embodiment, the enclosure portion 432 may not include the outer enclosure surface 4322. The groove 430 may be integrally and seamlessly connected to the first housing 410 and/or the second housing 420 in which the groove 430 is disposed.

In an embodiment, the inner enclosure surface 4321 may include a first inner enclosure surface F11. The first inner enclosure surface F11 may face in a direction (e.g., +Z direction) toward the hollow portion 431. The first inner enclosure surface F11 may be substantially planar.

In an embodiment, the inner enclosure surface 4321 may include a second inner enclosure surface F12. The second inner enclosure surface F12 may be positioned to face the first inner enclosure surface F11. The second inner enclosure surface F12 may face in a direction (e.g., -Z direction) opposite to the direction (e.g., +Z direction) in which the first inner enclosure surface F11 faces the hollow portion 431. The second inner enclosure surface F12 may be substantially planar. In an embodiment, the second inner enclosure surface F12 may be at least a partially open surface. In an embodiment not shown, the second inner enclosure surface F12 may be a closed surface.

In an embodiment, the inner enclosure surface 4321 may include a third inner enclosure surface F13. The third inner enclosure surface F13 may be positioned between the first inner enclosure surface F11 and the second inner enclosure surface F12. The third inner enclosure surface F13 may be connected to the first inner enclosure surface F11. The third inner enclosure surface F13 may be connected to the second inner enclosure surface F12. The third inner enclosure surface F13 may be a substantially curved surface.

In an embodiment, the outer enclosure surface 4322 may include a first outer enclosure surface F21. The first outer enclosure surface F21 may be positioned to be opposite to the first inner enclosure surface F11.

In an embodiment, the outer enclosure surface 4322 may include a second outer enclosure surface F22. The second outer enclosure surface F22 may be positioned to be opposite to the second inner enclosure surface F11. The second outer enclosure surface F22 may be positioned to be opposite to the first outer enclosure surface F21.

In an embodiment, the outer enclosure surface 4322 may include a third outer enclosure surface F23. The third outer enclosure surface F23 may be positioned between the first outer enclosure surface F21 and the second outer enclosure surface F22. The third outer enclosure surface F23 may be connected to the first outer enclosure surface F21. The third outer enclosure surface F23 may be connected to the second outer enclosure surface F22.

In an embodiment, the enclosure portion 432 may include a metal material (e.g., aluminum). In an embodiment, the enclosure portion 432 may include a non-metallic material (e.g., plastic).

In an embodiment, the groove 430 may include a slot 433. The slot 433 may be positioned between the second inner enclosure surface F12 and the second outer enclosure surface F22. The slot 433 may extend in one direction (e.g., the +/-Y direction) of the groove 430.

In an embodiment, the groove 430 may include a plurality of walls 434. The plurality of walls 434 may protrude from the second outer enclosure surface F22. The plurality of walls 434 may form a space between the plurality of walls 434.

In an embodiment, the groove 430 may include a cover 435. The cover 435 may be disposed on the second outer enclosure surface F22. The cover 435 may be disposed between the plurality of walls 434. The cover 435 may be configured to cover the hollow portion 431 and/or the slot 433.

In an embodiment, the cover 435 may include a non-metallic material. For example, the cover 435 may include polycarbonate.

In an embodiment, the groove 430 may be disposed in the second housing 420. In an embodiment not shown, the groove 430 may be disposed in the first housing 410.

In an embodiment, the electronic device 401 may include a PCB 440 (e.g., the first substrate 371 and/or the second substrate 372 of FIG. 3). The PCB 440 may be a FPCB.

In an embodiment, the PCB 440 may be configured to recognize the digital pen 450. The PCB 440 may include an antenna (not shown) configured to transmit and receive signals. For example, the antenna may have a loop shape. The antenna may be configured to form a field having a magnetic flux. The antenna of the PCB 440 and the coil 454 of the digital pen 450 may be configured to resonate at a specific frequency.

In an embodiment, the PCB 440 may be configured to charge the digital pen 450. For example, when the digital pen 450 is disposed in the field, an induced current may flow through the coil 454, and an electrical energy may be supplied to the battery 457.

In an embodiment, the PCB 440 may be disposed on the second outer enclosure surface F22 or over the second outer enclosure surface F22. The PCB 440 may be disposed to face the hollow portion 431 and/or the slot 433. The PCB 440 may be disposed on the cover 435 or over the cover 435.

In an embodiment, when the digital pen 450 is disposed in the hollow portion 431, the PCB 440 may at least partially overlap the coil 454 when viewed in a direction facing the digital pen 450 (e.g., the -Z direction).

In an embodiment, the electronic device 401 may include the digital pen 450. The digital pen 450 may be removably disposed in the hollow portion 431. The digital pen 450 may include the pen housing 451. The digital pen 450 may include the pen tip 452. The digital pen 450 may include the stopper 453. The digital pen 450 may include the coil 454. The digital pen 450 may include a first magnetic body 455 (e.g., the magnetic body 455 of FIGS. 4 to 6). The digital pen 450 may include the PCB 456. The digital pen 450 may include the battery 457.

In an embodiment, the electronic device 401 may include a display 461 (e.g., the display module 160 of FIG. 1, the display 261 of FIGS. 2A and 2B, and/or the display 361 of FIG. 3). The display 461 may include a first area 461A (e.g., the first area 261a of FIGS. 2A and 2B), a second area 461B (e.g., the second area 261b of FIGS. 2A and 2B), and a flexible area 461C (e.g., the flexible area 261c of FIGS. 2A and 2B).

In an embodiment, the electronic device 401 may include a second magnetic body 470. The second magnetic body 470 may substantially maintain the magnetic flux of the field transmitted from the antenna of the PCB 440 to the coil 454 of the digital pen 450. The second magnetic body 470 may be configured to reduce or prevent an eddy current that may occur in a metal material portion (e.g., a metal material portion of the enclosure portion 432, a metal material portion of the display 461, and/or a metal material portion of the electronic device 401). This may ensure that an operation of charging the digital pen 450 and/or an operation of recognizing the digital pen 450 are within a normal range.

In an embodiment, the second magnetic body 470 may include a sheet. The sheet may have a predetermined thickness (e.g., a thickness between about 0.05 millimeters (mm) to about 0.08 mm).

In an embodiment, the second magnetic body 470 may include particles having permeability. For example, the second magnetic body 470 may include MMP.

In an embodiment, the second magnetic body 470 may be disposed on the enclosure surface 4321. In an embodiment, the second magnetic body 470 may be disposed on the first inner enclosure surface F11. The second magnetic body 470 may extend over a part or all of a first length (e.g., a length in the +/-X direction) of the first inner enclosure surface F11. The second magnetic body 470 may extend at least partially across a second length (e.g., a length in the +/-Y direction) of the first inner enclosure surface F11.

In an embodiment, when the digital pen 450 is disposed in the hollow portion 431, the second magnetic body 470 may at least partially overlap the coil 454 in a direction (e.g., the +Z direction) facing the digital pen 450.

In an embodiment, a length of the second magnetic body 470 in one direction (e.g., the +/-Y direction) may be substantially equal to or greater than a length of the coil 454 in the direction (e.g., the +/-Y direction). The second magnetic body 470 may extend beyond the length of the coil 454. The excess length of the second magnetic body 470 may be in the millimeter scale.

In an embodiment, the second magnetic body 470 may not be disposed on the third inner enclosure surface F13. A gap may be formed between the pen housing 451 of the digital pen 450 and the third inner enclosure surface F13. The movement of the digital pen 450 in the hollow portion 431 may be smooth. In an embodiment not shown, the second magnetic body 470 may be disposed on the third inner enclosure surface F13.

In an embodiment, the second magnetic body 470 may not be disposed on the second inner enclosure surface F13. The second magnetic body 470 may not overlap the PCB 440. The second magnetic body 470 may not interfere with the coupling between the PCB 440 and the coil 454.

In an embodiment, the second magnetic body 470 may not be disposed on the digital pen 450. When the second magnetic body 470 is disposed on the digital pen 450, in a situation where the front surface (e.g., a surface in the +Z direction) and the rear surface (e.g., a surface in the -Z direction) of the digital pen 450 are reversed, a frequency of the digital pen 450 may be detected differently (e.g., oppositely).

In an embodiment, the second magnetic body 470 may include ferrite. The ferrite may be generated with increased resistivity and a reduced thickness compared to other magnetic materials.

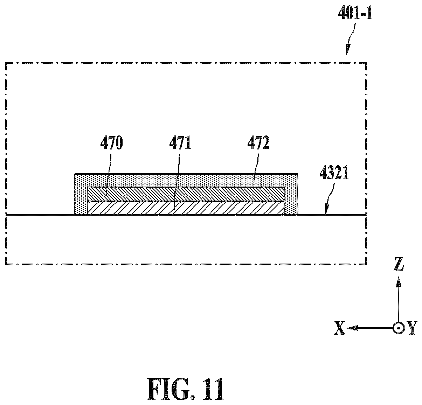

FIG. 11 is a cross-sectional view of a magnetic body of the electronic device of FIG. 8, taken along a line 10-10, according to various embodiments.

Referring to FIG. 11, an electronic device 401-1 (e.g., the electronic device 101 of FIG. 1, the electronic device 201 of FIGS. 2A and 2B, the electronic device 301 of FIG. 3, and/or the electronic device 401 of FIGS. 7 to 10) may include the magnetic body 470 disposed on the inner enclosure surface 4321.

In an embodiment, the electronic device 401-1 may include a joint 471. The joint 471 may be configured to join the magnetic body 470 and the inner enclosure surface 4321. The joint 471 may be disposed between the magnetic body 470 and the inner enclosure surface 4321. For example, the joint 471 may include at least one of polyamide, polyester, ethylene-vinyl acetate, polyurethane, or any other suitable joint material, or a combination thereof.

In an embodiment, the electronic device 401-1 may include a protector 472. The protector 472 may be configured to protect the magnetic body 470. The protector 472 may be configured to protect the magnetic body 470 when a digital pen (e.g., the digital pen 450 of FIGS. 4 to 6 and/or the digital pen 450 of FIGS. 7 to 10) is disposed in the electronic device 401-1 (e.g., the electronic device 401 of FIGS. 7 to 10). For example, the protector 472 may protect the magnetic body 470 from external impact (e.g., scratches) due to movement of the digital pen.

In an embodiment, the protector 472 may be disposed on a surface of surfaces of the magnetic body 470 opposite to the surface facing the enclosure surface 4321. The protector 472 may be disposed to surround the magnetic body 470 and the joint 471.

In an embodiment, the protector 472 may include a material that is resistant to external stimuli (e.g., moisture, scratches, and/or tears). For example, the protector 472 may include polyethylene terephthalate (PET).

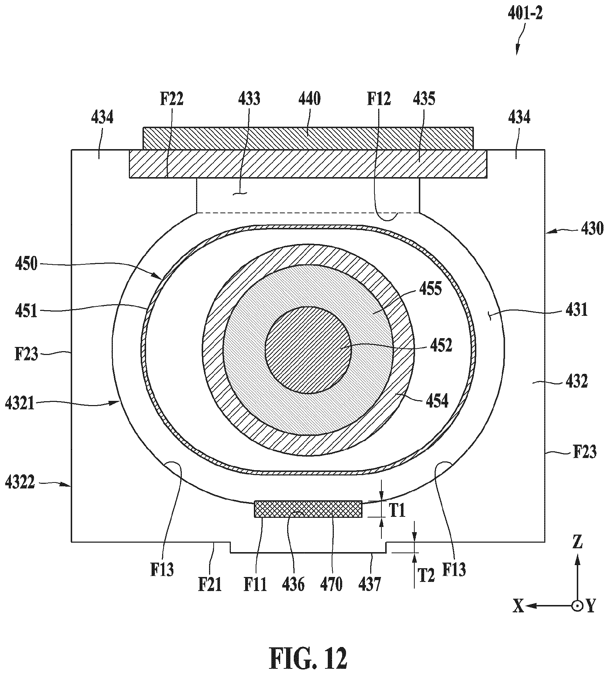

FIG. 12 is a cross-sectional view of the electronic device of FIG. 8, taken along a line 10-10, according to various embodiments.

Referring to FIG. 12, an electronic device 401-2 (e.g., the electronic device 101 of FIG. 1, the electronic device 201 of FIGS. 2A and 2B, the electronic device 301 of FIG. 3, the electronic device 401 of FIGS. 7 to 10, and/or the electronic device 401-1 of FIG. 11) may include the groove 430. The groove 430 may include the hollow portion 431 and the enclosure portion 432. The enclosure portion 432 may include the inner enclosure surface 4321 and the outer enclosure surface 4322. The inner enclosure surface 4321 may include the first inner enclosure surface F11, the second inner enclosure surface F12, and the third inner enclosure surface F13. The outer enclosure surface 4332 may include the first outer enclosure surface F21, the second outer enclosure surface F22, and the third outer enclosure surface F23. The groove 430 may include the slot 433. The groove 430 may include the walls 434. The groove 430 may include the cover 435. The electronic device 401 may include the PCB 440. The electronic device 401 may include the digital pen 450. The digital pen 450 may include the pen housing 451. The digital pen 450 may include the pen tip 452. The digital pen 450 may include the coil 454. The digital pen 450 may include a first magnetic body 455. The electronic device 401 may include the second magnetic body 470.

In an embodiment, the enclosure portion 432 may include a recess 436. The recess 436 may be formed in the inner enclosure surface 4321. The recess 436 may be formed at least partially on the first inner enclosure surface F11. The recess 436 may face the first outer enclosure surface F21. The recess 436 may be configured to accommodate at least a portion of the second magnetic body 470. At least a portion (e.g., the first inner enclosure surface F11) of the inner enclosure surface 4321 on which the recess 436 is formed may have a substantially constant flatness.

In an embodiment, a thickness T1 of the second magnetic body 470 may be greater than a depth of the recess 436. In an embodiment, the thickness T1 of the second magnetic body 470 may be substantially equal to the depth of the recess 436. In an embodiment, the thickness T1 of the second magnetic body 470 may be smaller than the depth of the recess 436.

In an embodiment, the enclosure portion 432 may include a protrusion 437. The protrusion 437 may be formed on the outer enclosure surface 4322. The protrusion 437 may be formed on the first outer enclosure surface F12. The protrusion 437 may face any component (e.g., the display module 160 of FIG. 1, the display 261 of FIGS. 2A and 2B, the display 361 of FIG. 3, and/or the display 461 of FIGS. 7 to 10) of an electronic device 401-2.

In an embodiment, the thickness T1 of the second magnetic body 470 may be substantially equal to a thickness T2 of the protrusion 437. In an embodiment, the thickness T1 of the second magnetic body 470 may be greater than the thickness T2 of the protrusion 437. In an embodiment, the thickness T1 of the second magnetic body 470 may be smaller than the thickness T2 of the protrusion 437.

According to an example embodiment the present disclosure may provide an electronic device that secures operations of the electronic device with respect to a digital pen (e.g., charging the digital pen and/or recognizing the digital pen) when the digital pen is disposed in the electronic device.

According to an example embodiment, an electronic device (101; 201; 301; 401) may include a housing (210, 220; 310, 320; 410, 420). The electronic device (101; 201; 301; 401) may include a groove (430). The groove (430) may be disposed in the housing

(410, 420). The groove (430) may include a hollow portion (431). The hollow portion (431) may be configured to accommodate a digital pen (450). The groove (430) may include an enclosure portion (432). The enclosure portion (432) may include an enclosure surface (4321). The enclosure surface (4321) may at least partially define the hollow portion (431). The electronic device (101; 201; 301; 401) may include a PCB (440). The PCB (440) may be configured to recognize and/or charge the digital pen (450). The PCB

(440) may face the hollow portion (431). The PCB (440) may be disposed in a housing (410, 420). The electronic device (101; 201; 301; 401) may include a magnetic body (470). The magnetic body (470) may be disposed on the enclosure surface (4321).

In an embodiment, the magnetic body (470) may include a sheet.

In an embodiment, the magnetic body (470) may include particles with permeability.

In an embodiment, the magnetic body (470) may be disposed not to overlap the PCB (440).

In an embodiment, the enclosure surface (4321) may include a first enclosure surface (F11). The first enclosure surface (F11) may be substantially planar. The enclosure surface (4321) may include a second enclosure surface (F13). The second enclosure surface (F13) may be connected to the first enclosure surface (F11). The second enclosure surface (F13) may be curved. The magnetic body (470) may be disposed on the first enclosure surface (F11).

In an embodiment, the magnetic body (470) may include ferrite.

In an embodiment, the electronic device (101; 201; 301; 401) may include a protector (472). The protector (472) may surround the magnetic body (470).

In an embodiment, the enclosure portion (432) may include a recess (436). A recess (436) may be formed on the enclosure surface (4321). The magnetic body (470) may be disposed on the recess (436).

In an embodiment, the enclosure portion (432) may include a protrusion (437). The protrusion (437) may protrude from an outer surface (4322) opposite to the enclosure surface (4321). The protrusion (437) may be disposed at a position corresponding to a position of the recess (436).

In an embodiment, the enclosure portion (432) may include a metal material.

In an embodiment, the enclosure portion (432) may include a slot (433). The slot (433) may be open in a direction facing the PCB (440).

In an embodiment, the digital pen (450) may include a coil (454).

In an embodiment, the magnetic body (470) may have a length that is substantially equal to or more than a length of the coil (454).

In an embodiment, the digital pen (450) may be removably accommodated in the hollow portion (431).

In an embodiment, the digital pen (450) may include a magnetic body (455).

According to an embodiment, an electronic device (101; 201; 301; 401) may include a first housing (210; 310; 410) and a second housing (220; 320; 420). The electronic device (101; 201; 301; 401) may include a hinge structure (334) configured to connect the first housing (210; 310; 410) and the second housing (220; 320; 420). The hinge structure (334) may be configured to relatively rotate the first housing (210; 310; 410) and the second housing (220; 320; 420) between a folded state in which the first housing (210; 310; 410) and the second housing (220; 320; 420) form a first angle, and an unfolded state in which the first housing (210; 310; 410) and the second housing (220; 320; 420) form a second angle greater than the first angle. The groove (430) may be disposed in the first housing (210; 310; 410) or the second housing (220; 320; 420).

According to an example embodiment, based on a digital pen being disposed in an electronic device, charging and detection of the digital pen may be secured.

The effects of the electronic device according to embodiments are not limited to the above-mentioned effects, and other unmentioned effects may be clearly understood from the description by one skilled in the art.

While the disclosure has been illustrated and described with reference to various example embodiments, it will be understood that the various embodiments are intended to be illustrative and not restrictive. It will be understood by those skilled in the art that various modifications may be made without departing from the true spirit and full scope of the disclosure, including the appended claims and their equivalents. It will be understood that any of the embodiment(s) described herein may be used in combination with any other embodiment(s) described herein.

## Claims

1. An electronic device (101; 201; 301; 401) comprising:
a housing (210, 220; 310, 320; 410, 420),
a groove (430) disposed in the housing (410, 420), wherein the groove (430) comprises:
a hollow portion (431) configured to accommodate a digital pen (450), and
an enclosure portion (432) comprising an enclosure surface (4321) at least partially defining the hollow portion (431),
a printed circuit board (PCB) (440) configured to recognize and/or charge the digital pen (450), and disposed in the housing (410, 420) to face the hollow portion (431), and
a magnetic body (470) disposed on the enclosure surface (4321).

2. The electronic device of claim 1, wherein the magnetic body (470) comprises a sheet.

3. The electronic device of claim 1 or 2, wherein the magnetic body (470) comprises particles having permeability.

4. The electronic device of one of claims 1 to 3, wherein the magnetic body (470) is disposed to not overlap the PCB (440).

5. The electronic device of one of claims 1 to 4, wherein the enclosure surface (4321) comprises:
a first enclosure surface (F11) that is substantially planar, and
a second enclosure surface (F13) that is curved and connected to the first enclosure surface (F11), and
wherein the magnetic body (470) is disposed on the first enclosure surface (F11).

6. The electronic device of one of claims 1 to 5, wherein the magnetic body (470) comprises ferrite.

7. The electronic device of one of claims 1 to 6, further comprising a protector (472) surrounding the magnetic body (470).

8. The electronic device of one of claims 1 to 7, wherein the enclosure portion 432 further comprises a recess (436) formed on the enclosure surface (4321), and
wherein the magnetic body (470) is disposed on the recess (436).

9. The electronic device of one of claims 1 to 8, wherein the enclosure portion (432) further comprises a protrusion (437) that protrudes from an outer surface (4322) opposite to the enclosure surface (4321), and
wherein the protrusion (437) is disposed at a position corresponding to a position of the recess (436).

10. The electronic device of one of claims 1 to 9, wherein the enclosure portion (432) comprises a metal material.

11. The electronic device of one of claims 1 to 10, wherein the enclosure portion (432) comprises a slot (433) that is open in a direction facing the PCB (440).

12. The electronic device of one of claims 1 to 11, wherein the digital pen (450) comprises a coil (454).

13. The electronic device of one of claims 1 to 12, wherein the magnetic body (470) has a length that is substantially equal to or more than a length of the coil (454).

14. The electronic device of one of claims 1 to 13, wherein the digital pen (450) is configured to be removably accommodated in the hollow portion (431).

15. The electronic device of one of claims 1 to 14, wherein the digital pen (450) comprises a magnetic body (455).
